# EUROPÄISCHE PATENTSCHRIFT

(11) **EP 3 178 652 B1**
(45) Veröffentlichungstag und Bekanntmachung des Hinweises auf die Patenterteilung: **06.06.2018**
(21) Anmeldenummer: 15198242.8
(22) Anmeldetag: 07.12.2015
(51) Int. Cl.: B32B 27/40, E04F 13/077, E04F 15/02

(54) **DEKORPANEEL UND VERFAHREN ZUM HERSTELLEN EINES SOLCHEN**
DECORATIVE PANEL AND METHOD FOR MANUFACTURING SAME
PANNEAU DE DECORATION ET SON PROCEDE DE FABRICATION

(43) Veröffentlichungstag der Anmeldung: 14.06.2017
(73) Patentinhaber: Akzenta Paneele + Profile GmbH, 56759 Kaisersesch (DE)
(72) Erfinder: Hannig, Hans-Jürgen, 51427 Bergisch Gladbach (DE)
(74) Vertreter: Michalski Hüttermann & Partner Patentanwälte mbB

(56) Entgegenhaltungen:
- WO-A1-2014/041128
- DE-U1-202011 107 844

## Beschreibung

Die vorliegende Erfindung betrifft ein Dekorpaneel. Die vorliegende Erfindung betrifft ferner ein Verfahren zum Herstellen eines derartigen Dekorpaneels. Ein derartiges Dekorpaneel erlaubt beispielsweise eine vergrößerte Stabilität.

Unter dem Begriff Dekorpaneel sind im Sinne der Erfindung Wand-, Decken-, Tür-, oder Bodenpaneele zu verstehen, welche ein auf eine Trägerplatte aufgebrachtes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Bisher werden solche Dekorpaneele vielfach als Laminate hergestellt, bei welchen auf eine Trägerplatte ein mit einem gewünschten Dekor vorbedrucktes Dekorpapier aufgebracht wird, auf welches dann wiederum ein sogenanntes Overlay aufgebracht wird. Alternativ kann das Dekor anstatt auf einem Dekorpapier unmittelbar auf einen Träger oder einen hierauf aufgebrachten Druckuntergrund aufgebracht sein. Beispielsweise kann das Dekor mittels Direktdruck aufgebracht werden.

Aus dem Dokument DE 10 2005 042 658 B3 ist beispielsweise eine Bauplatte, insbesondere ein Fußbodenpaneel aus einem Holzwerkstoff, bekannt. Eine derartige Bauplatte umfasst eine Oberseite, eine Unterseite, Verbindungsmittel und umlaufende Seitenflächen. Dabei ist es vorgesehen, dass neben der Oberseite mindestens eine Seitenfläche und mindestens ein Verbindungsmittel mit einem Dekor versehen sind. Ferner offenbart dieses Dokument, dass auf dem Dekor eine Abschlussschicht aus Polyurethan aufgebracht ist.

Das Dokument DE 10 2005 023 661 A1 beschreibt ferner ein Fußbodenpaneel, das eine obere dekorative und abriebfeste Schicht, eine Dämpfungszwischenschicht und einen tragenden Kern umfasst. Die Dämpfungszwischenschicht ist mit einem Klebstoff an dem Kern und der dekorativen und abriebfesten Schicht befestigt und kann beispielsweise aus Polyurethan ausgebildet sein.

WO 2014/041128 A1 beschreibt ein Paneel mit einer bedruckten Seitenkante. Ferner ist in dem Dokument offenbart, dass das Dekor auf eine auf den Träger aufgebrachte bedruckbare Schicht aufgebracht wird, welche etwa eine Folienschicht sein kann. Weiterhin offenbart dieses Dokument eine auf das Dekor aufgebrachte Schutzschicht.

DE 20 2011 107 844 U1 beschreibt ein Paneel mit Kantenbrechung. Dieses Dokument beschreibt, dass ein Paneel eine Trägerschicht und auf mindestens einer Seite der Trägerschicht eine Deckschicht aus einem Kunststoff, wie etwa Polyurethan aufweist.

Hinsichtlich der Schichtenfolge und der Ausgestaltung der jeweiligen Schichten eines dekorativen Laminats gibt es jedoch noch Raum für Verbesserungen.

Dies berücksichtigend ist es die Aufgabe der vorliegenden Erfindung, ein Dekorpaneel und ein Verfahren zur Herstellung eines Dekorpaneels anzugeben, welches wenigstens ein aus dem Stand der Technik bekanntes Problem zumindest teilweise zu überwinden vermag. Insbesondere ist es die Aufgabe der vorliegenden Erfindung, ein Dekorpaneel und ein Verfahren zur Herstellung eines Dekorpaneels anzugeben, welches eine verbesserte Stabilität aufweist.

Gelöst wir diese Aufgabe durch ein Dekorpaneel gemäß Anspruch 1 sowie durch ein Verfahren gemäß Anspruch 14. Bevorzugte Ausgestaltungen der Erfindung sich in den abhängigen Ansprüchen sowie der weiteren Beschreibung und den Figuren gegeben, wobei die weiteren beschriebenen Merkmale einzeln oder in einer beliebigen Kombination ein Bestandteil der Erfindung sein können, insoweit sich aus dem Kontext nicht explizit das Gegenteil ergibt.

Erfindungsgemäß wird ein Dekorpaneel vorgeschlagen, aufweisend einen Schichtaufbau mit einem plattenförmigen Träger, auf dem ein Dekoruntergrund und eine auf dem Dekoruntergrund aufgebrachte Dekorschicht vorgesehen sind, wobei das Dekorpaneel in seinem Schichtaufbau ferner zumindest eine auf die Dekorschicht aufgebrachte Schutzschicht aufweist. Dabei ist es vorgesehen, dass das Dekorpaneel in seinem Schichtaufbau wenigstens eine Stabilitätsschicht aufweist, wobei die Stabilitätsschicht Polyurethan aufweist, und wobei die Stabilitätsschicht eine Dichte von > 0,8 g/cm³ aufweist.

Unter einer Stabilitätsschicht ist im Sinne der vorliegenden Erfindung insbesondere zu verstehen eine Schicht, welche wenigstens eine Stabilitätseigenschaft des Dekorpaneels im Vergleich zu einer Ausgestaltung ohne eine entsprechende Stabilitätsschicht zu verbessern vermag. Beispielsweise kann durch die Stabilitätsschicht die Abriebfestigkeit verbessert werden oder kann die Formstabilität des Paneels verbessert werden oder kann der Halt des Dekors verbessert werden.

Unter dem Begriff "dekoriertes Wand- oder Bodenpaneel" beziehungsweise "Dekorpaneel" sind im Sinne der Erfindung insbesondere Wand-, Decken, Tür- oder Bodenpaneele zu verstehen, welche ein auf eine Trägerplatte aufgebrachtes eine Dekorvorlage nachbildendes Dekor aufweisen. Dekorpaneele werden dabei in vielfältiger Weise sowohl im Bereich des Innenausbaus von Räumen, als auch zur dekorativen Verkleidung von Bauten, beispielsweise im Messebau, verwendet. Eine der häufigsten Einsatzbereiche von Dekorpaneelen ist deren Nutzung als Fußbodenbelag. Die Dekorpaneele weisen dabei vielfach ein Dekor auf, welches einen Naturwerkstoff nachempfinden soll.

Beispiele für solche nachempfundenen Naturwerkstoffe beziehungsweise Dekorvorlagen sind Holzarten wie beispielsweise Ahorn, Eiche, Birke, Kirsche, Esche, Nussbaum, Kastanie, Wenge oder auch exotische Hölzer wie Panga-Panga, Mahagoni, Bambus und Bubinga.

Darüber hinaus werden vielfach Naturwerkstoffe wir Steinoberflächen oder Keramikoberflächen nachempfunden.

Entsprechend kann unter einer "Dekorvorlage" im Sinne der vorliegenden insbesondere verstanden werden ein derartiger originaler Naturwerkstoff beziehungsweise zumindest eine Oberfläche eines solchen, der durch das Dekor imitiert beziehungsweise nachempfunden werden soll.

Unter einem "Träger" kann insbesondere eine in einem fertig gestellten Paneel als Kern beziehungsweise als Basislage dienende Lage verstanden werden, die insbesondere einen Naturstoff, wie etwa einen Holzwerkstoff, einen Faserwerkstoff oder einen Werkstoff umfassend einen Kunststoff aufweisen kann. Beispielsweise kann der Träger dem Paneel bereits eine geeignete Stabilität verleihen oder zu dieser beitragen.

Unter einem "bahnartigen Träger" kann dabei ein Träger verstanden werden, der etwa in seinem Herstellungsprozess eine bahnartige und damit im Vergleich zu seiner Dicke beziehungsweise Breite deutlich größere Länge aufweist und deren Länge beispielsweise größer als 15 Meter betragen kann.

Unter einem "plattenförmigen Träger" kann dabei ferner im Sinne der vorliegenden Erfindung ein Träger verstanden werden, der durch Vereinzelung aus dem bahnartigen Träger geformt ist und in der Form einer Platte ausgebildet ist. Ferner kann der plattenförmige Träger bereits die Form und/oder Größe des herzustellenden Paneels vorgeben. Jedoch kann der plattenförmige Träger auch als Großplatte vorgesehen sein. Eine Großplatte im Sinne der Erfindung ist dabei insbesondere ein Träger, dessen Abmessungen die Abmessungen der letztendlichen Dekorpaneele um ein mehrfaches überschreiten und welche im Laufe des Herstellungsverfahrens in eine entsprechende Mehrzahl von Dekorpaneelen zerteilt wird, beispielsweise durch Sägen, Laser- oder Wasserstrahlschneiden. Beispielsweise kann die Großplatte dem bahnförmigen Träger entsprechen.

Ein Dekorpaneel gemäß der vorliegenden Erfindung weist einen Schichtaufbau auf beziehungsweise ist aus diesem Schichtaufbau ausgebildet. Somit weist das Dekorpaneel eine Mehrzahl aneinander befestigter und aufeinanderfolgender Schichten auf.

Dabei sei grundsätzlich darauf hingewiesen, dass ein Vorliegen einer Schicht auf einer weiteren Schicht beziehungsweise ein Aufbringen einer Schicht auf eine weitere Schicht bedeuten kann, dass die Schicht unmittelbar oder unter Verwendung einer oder mehrerer Zwischenschichten auf der weiteren Schicht vorliegen oder auf die weitere Schicht aufgebracht werden kann.

Eine erste Schicht des Schichtaufbaus, welche etwa die unterste Schicht sein kann, ist ein plattenförmiger Träger. Der plattenförmige Träger kann dabei in an sich bekannter Weise für die Herstellung von Dekorpaneelen ausgestaltet sein. In Anhängigkeit des gewünschten Einsatzbereiches der Dekorpaneele kann der Träger aus unterschiedlichen Materialen gefertigt sein. So kann der Träger beispielsweise aus einem Holzwerkstoff bestehen beziehungsweise diesen aufweisen, sofern das Dekorpaneel keiner übermäßigen Feuchtigkeit oder Witterungsbedingungen ausgesetzt ist. Soll das Paneel hingegen z.B. in Feuchträumen oder im Außenbereich eingesetzt werden, kann der Träger beispielsweise aus einem Kunststoff bestehen oder diesen aufweisen, beispielsweise aus einem WPC-Material aufgebaut sein.

Holzwerkstoffe im Sinne der Erfindung sind dabei neben Vollholzwerkstoffen auch Materialien wie z.B. Brettsperrholz, Brettschichtholz, Stabsperrholz, Funiersperrholz, Furnierschichtholz, Funierstreifenholz und Biegesperrholz. Darüber hinaus sind unter Holzwerkstoffen im Sinne der Erfindung auch Holzspanwerkstoffe wie z.B. Spanpressplatten, Strangpressplatten, Grobspanplatten (Oriented Structural Board, OSB) und Spanstreifenholz sowie auch Holzfaserwerkstoffe wie z.B. Holzfaserdämmplatten (HFD), mittelharte und harte Faserplatten (MB, HFH), sowie insbesondere mitteldichte Faserplatten (MDF) und hochdichte Faserplatten (HDF) zu verstehen. Auch moderne Holzwerkstoffe wie Holz-Polymer-Werkstoffe (Wood Plastic Composite, WPC), Sandwichplatten aus einem leichten Kernmaterial wie Schaumstoff, Hartschaum oder Papierwaben und einer darauf aufgebrachten Holzschicht, sowie mineralisch, z.B. mit Zement, gebundene Holzspanplatten bilden Holzwerkstoffe im Sinne der Erfindung. Auch Kork stellt dabei einen Holzwerkstoff im Sinne der Erfindung dar.

Kunststoffe, welche bei der Herstellung entsprechender Paneele eingesetzt werden können, sind beispielsweise thermoplastische Kunststoffe, wie Polyvinylchlorid, Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate dieser. Beispielsweise kann ein Copolymerisat von Polyethylen und Polypropylen, beispielsweise in einem Verhältnis von 1/1 verwendet werden. Ferner kann beispielhaft ein Holz und ein Polymer geeignet sein, welches in einem Verhältnis von 40/60 bis 70/30, beispielsweise 50/50 vorliegen kann. Als Polymere Bestandteile können etwa Polypropylen, Polyethylen oder ein Copolymer aus den beiden vorgenannten Materialien verwendet werden, wobei ferner Holzmehl als Holzbestandteil Verwendung finden kann. Die Kunststoffe können grundsätzlich übliche Füllstoffe enthalten, beispielsweise Kalziumcarbonat (Kreide), Aluminiumoxid, Kieselgel, Quarzmehl, Holzmehl, Gips. Auch können sie in bekannter Weise eingefärbt sein.

Auf dem Träger ist ein Dekoruntergrund vorgesehen, welcher insbesondere dazu dienen kann, ein verbessertes Dekorbild zu ermöglichen und/oder die Haftung des Dekors auf dem Träger zu verbessern. Bevorzugt kann zunächst ein Primer insbesondere für Druckverfahren als Dekoruntergrund aufgebracht sein, etwa in einer Dicke von ≥ 10µm bis ≤ 60 µm. Dabei kann als Primer eine flüssige strahlungshärtende Mischung auf Basis eines Urethans oder eines Urethanacrylats, gegebenenfalls mit einem oder mehreren von einem Photoinitiator, einem Reaktivverdünner, einem UV-Stabilisator, einem Rheologiemittel wie einem Verdicker, Radikalfänger, Verlaufshilfsmittel, Entschäumer oder Konservierungsmittel, Pigment und/oder einem Farbstoff vorliegen.

Neben der Verwendung eines Primer ist es möglich, das Dekor auf ein mit einem entsprechenden Dekor bedruckbares Dekorpapier aufzubringen, welches etwa mittels einer zuvor auf den Träger aufgebrachten Harzschicht als Verbindungsmittel vorgesehen sein kann. Ein derartiger Dekoruntergrund ist sowohl für Flexo-Druck, Offset-Druck oder Siebdruckverfahren, als auch insbesondere für Digitaldrucktechniken, wie beispielsweise Inkjet-Verfahren oder Laserdruck-Verfahren geeignet. Zur Aufbringung der Harzschicht kann es vorzugsweise vorgesehen sein, dass eine Harzzusammensetzung aufgebracht wird, welche als Harzkomponente wenigstens eine Verbindung ausgewählt aus der Gruppe bestehend aus Melaminharz, Formaldehydharz, Harnstoffharz, Phenolharz, Epoxidharz, ungesättigtes Polyesterharz, Diallylphthalat oder Mischungen dieser aufweist. Dabei kann die Harzzusammensetzung beispielsweise in einer Auftragsmenge zwischen ≥ 5 g/m² und ≤ 40 g/m², vorzugsweise ≥ 10 g/m² und ≤ 30 g/m² aufgetragen werden. Ferner kann ein Papier oder Vlies mit einer Grammatur zwischen ≥ 30 g/m² und ≤ 80 g/m², vorzugsweise zwischen ≥ 40 g/m² und ≤ 70 g/m² auf den plattenförmigen Träger aufgebracht.

Als weitere Schicht des Schichtaufbaus beziehungsweise des Schichtverbunds kann eine auf dem Dekoruntergrund aufgebrachte Dekorschicht vorgesehen sein. Beispielsweise kann die Dekorschicht eine Druckschicht umfassen beziehungsweise aus dieser ausgestaltet sein und etwa aus dieser bestehen. Als solche kann die Dekorschicht etwa aufgebracht werden mittels eines Direktdruckverfahrens. Unter dem Begriff "Direktdruck" wird im Sinne der Erfindung das Aufbringen eines Dekors direkt auf den Träger eines Paneels oder auf eine auf dem Träger aufgebrachte insbesondere nicht bedruckte Faserwerkstoffschicht oder einen sonstigen Dekoruntergrund verstanden. Entgegen der konventionellen Verfahren, bei welchen auf einen Träger eine zuvor mit einem gewünschten Dekor bedruckte Dekorschicht aufgebracht wird, erfolgt beim Direktdruck das Aufdrucken des Dekors unmittelbar im Zuge der Oberflächenbeschichtung bzw. der Paneel-Herstellung. Dabei können unterschiedliche Drucktechniken, wie beispielsweise Flexo-Druck, Offset-Druck oder Siebdruck zum Einsatz gelangen. Insbesondere können dabei Digitaldrucktechniken, wie beispielsweise Inkjet-Verfahren oder Laserdruck-Verfahren eingesetzt werden.

Bevorzugt wird zur Aufbringung der Dekorschicht insbesondere mittels Direktdruckverfahren eine strahlungshärtbare Farbe und/oder Tinte eingesetzt. Strahlungshärtbar bedeutet dabei im Sinne der Erfindung, dass die Farbe und/oder Tinte mit elektromagnetischer Strahlung, wie z.B. UV-Strahlung oder Elektronenstrahlung gehärtet wird. Dabei kann es insbesondere vorgesehen sein, dass die Farbe und/oder Tinte entsprechende strahlungs- bzw. photoinduziert polymerisierende Bestandteile aufweist. Beispiele für geeignete Bestandteile sind Acrylate, Epoxide oder cyclische Amine, wie z.B. Ethylenimin.

Die Dekorschicht kann beispielsweise in einer Dicke in einem Bereich von ≥ 5µm bis ≤ 10µm aufgebracht sein.

Es kann ferner vorgesehen sein, neben einer bezüglich Farbe und/oder Struktur positiven Abbildung ferner auch eine entsprechende negative Abbildung der Dekorvorlage aufzubringen. Im Detail kann, wie es beispielsweise von einem Positiv-Beizen beziehungsweise Negativ-Beizen für Holzwerkstoffe bekannt ist, durch die Verwendung von digitalen Daten der Farbeindruck beispielsweise einer Maserung umgekehrt werden, so dass bezüglich der Farbe beziehungsweise insbesondere helleren und dunkleren Bereichen ein Negativ entsteht. Entsprechendes ist neben dem Farbeindruck ebenfalls für die aufgebrachte Struktur möglich, so dass auch bezüglich der strukturellen Ausgestaltung ein Negativ realisierbar ist. Auch derartige Effekte sind auf Basis digitaler dreidimensionaler Daten problemlos und ohne Vorlaufzeit beziehungsweise Umbauten in einen Herstellungsprozess integrierbar.

Insbesondere zum Schutz der aufgebrachten Dekorschicht kann es ferner vorgesehen sein, dass der Schichtaufbau beziehungsweise das Dekorpaneel zumindest eine auf die Dekorschicht aufgebrachte Schutzschicht, die als Deck- und/oder Verschleißschicht dienen kann, aufweist. Die Schutzschicht im Sinne der Erfindung ist eine als äußerer Abschluss aufgebrachte Schicht, welche insbesondere die Dekorschicht vor Abnutzung oder Beschädigung durch Schmutz, Feuchtigkeitseinfluss oder mechanische Einwirkungen, wie beispielsweise Abrieb, schützt. Insbesondere bei dem Aufbringen einer Schutzschicht bietet sich ein weiterer Vorteil der vorbeschriebenen Herstellung des Dekoruntergrunds. Im Detail kann die Haftung der Schutzschicht an dem bedruckten Dekoruntergrund deutlich verbessert werden, so dass eine besonders gute Stabilität und Langlebigkeit ermöglicht und ferner ein Abplatzen bei einem Pressen zum Einbringen einer Struktur, verhindert werden kann.

Diesbezüglich kann es vorgesehen sein, dass in die Schutzschicht eine mit dem Dekor übereinstimmende Oberflächenstrukturierung eingebracht ist. Unter einer mit dem Dekor übereinstimmenden Oberflächenstrukturierung ist zu verstehen, dass die Oberfläche des Dekorpaneels eine haptisch wahrnehmbare Struktur aufweist, welche in ihrer Form und ihrem Muster dem aufgebrachten Dekor entspricht, um so eine möglichst originalgetreue Nachbildung eines natürlichen Werkstoffes auch hinsichtlich der Haptik zu erhalten. Dabei kann es vorgesehen sein, dass die Trägerplatte bereits eine Strukturierung aufweist und eine Ausrichtung eines Druckwerkzeuges zur Aufbringung des Dekors und der Trägerplatte zueinander in Abhängigkeit mittels der mittels optischer Verfahren erfassten Strukturierung der Trägerplatte erfolgt. Zur Ausrichtung des Druckwerkzeuges und der Trägerplatte zueinander kann es dabei vorgesehen sein, dass eine zur Ausrichtung notwendige Relativbewegung zwischen Druckwerkzeug und Trägerplatte zueinander durch eine Verschiebung der Trägerplatte oder durch eine Verschiebung des Druckwerkzeugs erfolgt.

Weiterhin kann es vorgesehen sein, dass eine Strukturierung der Dekorpaneele nach dem Auftrag der Schutzschicht erfolgt. Hierzu kann es bevorzugt vorgesehen sein, dass als Schutzschicht eine härtbare Zusammensetzung aufgetragen wird und ein Aushärtungsprozess nur in dem Maße erfolgt, dass lediglich eine Teilhärtung der Deck- und/oder Verschleißschicht erfolgt. In die so teilgehärtete Schicht wird mittels geeigneter Werkzeuge, wie beispielsweise einer Hartmetall-Strukturwalze oder eines Stempels beziehungsweise einer Presse, wie etwa einer Kurztaktpresse, eine gewünschte Oberflächenstruktur eingeprägt. Dabei erfolgt die Prägung bevorzugt in Übereinstimmung mit dem aufgebrachten Dekor, wie dies vorstehend beschrieben ist.

Darüber hinaus kann es vorgesehen sein, dass die Schutzschicht als Lack, etwa als strahlungshärtebare oder zumindest teilweise strahlungshärtebare Zusammensetzung, beispielsweise auf Basis einen Acrylat-Lackes, eines Epoxid-Lackes, oder eines Urethanacrylates aufgetragen wird. Dabei kann es insbesondere bevorzugt sein, dass die Zusammensetzung nach dem Auftrag auf die Dekorschicht in einem ersten Schritt strahlungsinduziert nur teilweise gehärtet wird und in teilgehärtete Schicht in der zuvor beschriebenen Weise eine mit dem Dekor übereinstimmende Oberflächenstrukturierung eingebracht wird.

Beispielsweise kann es dabei vorgesehen sein, dass zwei Schutzschichten vorgesehen sind, beziehungsweise dass die Schutzschicht zweischichtig ausgestaltet ist. Dabei können die Schichten aus dem gleichen Material, insbesondere Lack, oder aus verschiedenen Materialien, wie insbesondere aus verschiedenen Lacken, gefertigt sein. Ein geeigneter Lack kann beispielsweise ein UV-härtender Lack, wie beispielsweise ein Acryllack beziehungsweise ein acrylbasierter Lack sein. Dabei kann eine untere Schutzschicht eine Struktur aufweisen und die obere Schutzschicht die untere Schutzschicht bedecken. In dieser Ausgestaltung kann es vorgesehen sein, dass die untere Schicht beim Auftrag eine vergleichsweise höhere Viskosität aufweist, um Strukturen auch vor dem Härten stabil halten zu können, und/oder dass die obere Schicht eine vergleichsweise niedrige Viskosität aufweist, um einen einheitlichen Abschluss bilden zu können. Ferner kann es vorgesehen sein, dass die untere Schicht eine größere Dicke aufweist, als die obere Schicht. So kann die untere Schicht, die als Strukturlack dienen kann, etwa in einer Auftragsmenge von ≥ 30 g/m² bis ≤ 40 g/m² aufgetragen sein, wohingegen die obere Schicht, die als Decklack dienen kann, etwa in einer Auftragsmenge von ≥ 10 g/m² bis ≤ 15 g/m² aufgetragen sein kann.

Bezüglich der der Schutzschicht kann es ferner vorgesehen sein, dass diese Hartstoffe wie beispielsweise Titannitrid, Titancarbid, Siliciumnitrid, Siliciumcarbid, Borcarbid, Wolframcarbid, Tantalcarbid, Aluminiumoxid (Korund), Zirconiumoxid oder Mischungen dieser aufweist, um die Verschleißfestigkeit der Schicht zu erhöhen. Dabei kann es vorgesehen sein, dass der Hartstoff in einer Menge zwischen 5 Gew.-% und 40 Gew.-%, vorzugsweise zwischen 15 Gew.-% und 25 Gew.-% in der Schutzschichtzusammensetzung enthalten ist. Vorzugsweise weist der Hartstoff dabei einen mittleren Korndurchmesser zwischen 10 µm und 250 µm, weiter vorzugsweise zwischen 10µm und 100µm auf. Hierdurch wird vorteilhafter Weise erreicht, dass die Schutzschichtzusammensetzung eine stabile Dispersion ausbildet und eine Entmischung bzw. ein Absetzten des Hartstoffes in der Schutzschichtzusammensetzung vermieden werden kann. Zur Ausbildung einer entsprechenden Schutzschicht ist es in einer Ausgestaltung der Erfindung vorgesehen, dass die Hartstoff enthaltende und strahlungshärtbare Zusammensetzung in einer Konzentration zwischen 10 g/m² und 300 g/m², vorzugsweise zwischen 50 g/m² und 250g/m² aufgetragen wird. Dabei kann die Auftragung beispielsweise mittels Walzen, wie Gummiwalzen oder mittels Gießvorrichtungen aufgetragen werden. In einer weiteren Ausgestaltung der Erfindung kann es vorgesehen sein, dass der Hartstoff zum Zeitpunkt des Auftrages der Verschleißschichtzusammensetzung nicht in der Zusammensetzung enthalten ist, sondern als Partikel auf die aufgetragenen Verschleißschichtzusammensetzung aufgestreut wird und diese im Anschluss gehärtet wird.

Neben den vorgenannten Schichten ist es bei einem Dekorpaneel vorgesehen, dass das Dekorpaneel in seinem Schichtaufbau wenigstens eine Stabilitätsschicht aufweist, wobei die Stabilitätsschicht Polyurethan umfasst und eine Dichte von > 0,8 g/cm³ aufweist. Beispielsweise kann Polyurethan mit einer eine Dichte von > 0,8 g/cm³ zum Ausbilden der Stabilitätsschicht verwendet werden. Insbesondere durch das Vorsehen einer derartigen Stabilitätsschicht lassen sich signifikante Vorteile im Vergleich zu Lösungen aus dem Stand der Technik ermöglichen.

Im Detail umfasst der Schichtaufbau somit wenigstens eine Schicht, die Polyurethan einer definierten Dichte aufweist und beispielsweise daraus bestehen kann und die in dem vorliegenden Schichtaufbau als Stabilitätsschicht dienen soll. Diese Schicht soll somit dem Schichtaufbau und damit dem Dekorpaneel eine vergrößerte Stabilität verleihen verglichen zu einem vergleichbaren Schichtaufbau, ohne eine derartige Stabilitätsschicht.

Dabei hat sich in überraschender Weise gezeigt, dass die Stabilitätsschicht insbesondere dadurch besonders effektiv ist, dass die Stabilitätsschicht eine Dichte von > 0,8 g/cm³ aufweist. Die jeweiligen Stabilitätseigenschaften können dabei neben der konkreten Ausgestaltung der Stabilitätsschicht und etwa durch das eingesetzte Polyurethan, insbesondere erzielbar sein durch die Positionierung der Stabilitätsschicht.

Grundsätzlich kann die Stabilitätsschicht durch ihre Ausgestaltung aus Polyurethan mit einer Dichte in einem Bereich von > 0,8 g/cm³ es beispielsweise ermöglichen, dass das Dekorpaneel als Ganzes eine erhöhte Stabilität erhält.

Dabei kann die Stabilitätsschicht grundsätzlich insbesondere eine hohe mechanische Stabilität bereitstellen, was sich beispielsweise in einer hohen Stoß- und Abriebfestigkeit zeigen kann. Ferner kann aufgrund der erhöhten Stabilität die Handhabbarkeit mit derartigen Dekorpaneelen vereinfacht werden. Darüber hinaus kann eine besonders gute Lagerfähigkeit realisiert werden.

Durch die Ausgestaltung aus Polyurethan kann ferner eine einfache und kostengünstige Herstellbarkeit gegeben sein. Denn insbesondere bei der Verwendung von Polyurethan kann das Aufbringen der Stabilitätslage beispielsweise durch einen Flüssigauftrag, also beispielsweise durch einen Auftrag als Schmelze erfolgen, was eine einfache und definierte Aufbringbarkeit ermöglichen kann. Darüber hinaus kann durch einen derartigen Auftrag aus der Schmelze es auch für vergleichsweise hohe Dichten des Polyurethans ein Auftrag besonders einfach und einheitlich ermöglicht werden.

Insbesondere für den Fall, bei dem die Stabilitätsschicht aus Polyurethan besteht, kann somit eine besonders einfache und definierte Ausbildung der Stabilitätsschicht erfolgen.

Beispielsweise kann die Stabilitätsschicht insbesondere dann, wenn sie aus Polyurethan besteht, durch eine Auftragsmenge gebildet sein, die in einem Bereich liegt von ≥ 40 g/m² bis ≤ 70 g/m², beispielsweise von ≥ 50 g/m² bis ≤ 60 g/m². Entsprechend kann die Stabilitätsschicht eine beispielhafte Dicke von ungefähr 0,4 mm aufweisen, wobei die Dicke in verständlicher Weise abhängig ist von der Dichte und der Auftragsmenge.

Mit Bezug auf die Dichte des Polyurethans beziehungsweise der Stabilitätsschicht kann es weiterhin besonders bevorzugt sein, dass die Stabilitätsschicht eine Dichte in einem Bereich von ≥ 0,9 g/cm³ bis ≤ 2 g/cm³, insbesondere in einem Bereich von ≥ 1,15 g/cm³ bis ≤ 1,5 g/cm³, aufweist. Beispielsweise kann eine Dichte von 1,41 g/cm³ oder 1,23 g/cm³ vorliegen. Es hat sich in überraschender Weise gezeigt, dass die vorbeschriebenen Effekte insbesondere in den vorbeschriebenen Dichtebereichen besonders effektiv sein können.

Weiterhin kann es vorteilhaft sein, dass das verwendete Polyurethan eine Viskosität aufweist, die in einem Bereich liegt von ≥ 4000 mPas bis ≤ 15000 mPas, beispielsweise von ≥ 6000 mPas bis ≤ 12000 mPas, wobei sich die vorgenannten Werte auf eine Viskosität nach Brookfield HBTD 10 Upm bei 140°C beziehen, insbesondere nach ISO 1652:2011.

Beispielsweise kann es von Vorteil sein, wenn die Stabilitätsschicht aus einer Polyurethanschicht besteht. Insbesondere durch eine derartige Ausgestaltung können die Stabilitätseigenschaften besonders effektiv sein. Unter einer Polyurethanschicht kann dabei insbesondere verstanden werden eine Schicht, die neben Polyurethan keine weiteren gewollt zugesetzten Stoffe aufweist. Gegebenenfalls neben Polyurethan vorhandene Substanzen können insbesondere in dem eingesetzten Polyurethan vorhandene Substanzen sein und damit abhängig sei von der Reinheit des eingesetzten Produkts. Beispielsweise können aus der Herstellung resultierende Substanzen enthalten sein, wobei dies insbesondere bei Isocyanaten vorteilhaft verhindert werden sollten. Insbesondere können beispielsweise derartige Substanzen, wie etwa Verunreinigungen, in einer Menge von ≤ 10 Gew.-%, vorzugsweise von ≤ 5 Gew.-% vorliegen.

Mit Bezug auf die Stabilitätsschicht kann es ferner vorteilhaft sein, dass das Polyurethan auf Hexamethylendiisocyanat als Strukturelement basiert. Insbesondere kann es vorgesehen sein, dass das Polyurethan der Stabilitätsschicht auf Hexamethylen-1,6-diisocyanat als Strukturelement basiert. Unter einem Basieren auf einem Strukturelement soll dabei insbesondere verstanden werden, dass das Polyurethan unter Verwendung dieser Substanz hergestellt worden ist. Es hat sich in überraschender Weise gezeigt, dass die vorbeschriebenen vorteilhaften Stabilitätseffekte insbesondere in dieser Ausgestaltung besonders effektiv auftreten können.

Es kann weiterhin vorteilhaft sein, dass das Polyurethan der Stabilitätsschicht einen Schmelzpunkt oder Erweichungspunkt von ≤ 150°C aufweist, wobei der vorgenannte Wert bestimmbar ist nach der sogenannten "ring and ball method", etwa entsprechend ISO 4625-1:2004. Beispielsweise kann der Schmelzpunkt oder Erweichungspunkt in einem Bereich von ≤ 120°C liegen, wobei die untere Grenze durch das Anwendungsgebiet bestimmt sein kann. In dieser Ausgestaltung kann eine besonders vorteilhafte Herstellbarkeit des Schichtaufbaus und damit des Dekorpaneels ermöglicht werden. Denn insbesondere in dieser Ausgestaltung kann es ermöglicht werden, dass die Stabilitätsschicht durch einen Schmelzauftrag auf die darunter liegende Schicht aufgebracht werden kann. Dabei können aufgrund des niedrigen Schmelz- beziehungsweise Erweichungspunkts niedrige Applikationstemperaturen ermöglicht werden, was eine einfache Verfahrensführung erlaubt und zudem die Gefahr einer temperaturbedingten Beschädigung der darunter liegenden Schicht gering halten beziehungsweise ausschließen kann.

Es kann weiterhin bevorzugt sein, dass wenigstens eine Stabilitätsschicht zwischen der Dekorschicht und der Schutzschicht angeordnet ist. Es hat sich in überraschender Weise gezeigt, dass durch das Vorsehen der Stabilitätsschicht zwischen der Dekorschicht und der Schutzschicht Abriebwerte des Dekorpaneels weiter gesteigert werden können, so dass die Langzeitstabilität ebenfalls gesteigert werden kann. Dabei kann es ferner ermöglicht werden, dass die Schutzschicht einen besonders guten Halt an dem Schichtverbund aufweist, was die Stabilität des Dekorpaneels weiter steigern kann. Somit kann das Dekorpaneel insbesondere in dieser Ausgestaltung auch bei widrigen äußeren Einflüssen eine besonders hohe Langzeitstabilität ermöglichen.

Darüber hinaus kann sich eine Stabilitätsschicht zwischen der Dekorschicht und der Schutzschicht dadurch auszeichnen, dass insbesondere durch die vergleichsweise hohe Dichte der Stabilitätsschicht sich in diese Strukturen einprägen lassen. Somit braucht eine Strukturierung durch das Einbringen von eine Dekorvorlage nachbildenden Strukturen nicht auf die Deckschicht begrenzt zu sein, sondern kann vielmehr sich in die Stabilitätsschicht fortsetzen oder nur in dieser Vorliegen. Daher kann es besonders vorteilhaft sein, wenn die Stabilitätsschicht mit einer Strukturierung versehen ist, insbesondere wobei die Strukturierung der Stabilitätsschicht und der Deck- und/oder Verschleißschicht eine Dekorvorlage nachbilden können. In dieser Ausgestaltung kann die Schutzschicht somit vergleichsweise dünn sein, was verfahrenstechnische Vorteile mit sich bringen kann.

Es kann weiterhin vorteilhaft sein, dass wenigstens eine Stabilitätsschicht zwischen dem Träger und der Dekorschicht angeordnet ist. In dieser Ausgestaltung kann eine verbesserte Haftung der Dekorschicht ermöglicht werden, was sich ebenfalls positiv auf die Stabilität auswirken kann. So kann es beispielsweise verhindert werden, dass etwa während der Herstellung des Dekorpaneels, etwa bei einer Strukturierung der Deckschicht durch eine Presse, der Effekt auftritt, dass die Deckschicht nicht ausreichend an dem Untergrund haftet und somit die Oberfläche beschädigt wird. Somit kann es in dieser Ausgestaltung ermöglicht werden, dass ein Schichtaufbau erzeugbar ist, der ein hervorragendes Druckbild erlaubt und dabei weitere verfahrenstechnische Vorteile mit sich bringt.

Mit Bezug auf den plattenförmigen Träger kann es ferner vorteilhaft sein, dass dieser einen Holzwerkstoff, insbesondere einen Holz-Kunststoff-Komposit-Werkstoff (WPC-Werkstoff), aufweist. Beispielsweise kann der Träger beziehungsweise die Trägerplatte aus einem thermoplastischen, elastomeren oder duroplastischen Kunststoff zumindest teilweise ausgebildet sein. Des Weiteren sind Recyclingwerkstoffe aus den genannten Materialien im Rahmen des erfindungsgemäßen Verfahrens einsetzbar. Bevorzugt als Plattenmaterial, etwa im Rahmen eines WPC-Materials oder eines reinen Kunststoff-Materials, können dabei insbesondere thermoplastische Kunststoffe, wie Polyvinylchlorid (PVC), Polyolefine (beispielsweise Polyethylen (PE), Polypropylen (PP), Polyamide (PA), Polyurethane (PU), Polystyrol (PS), Acrylnitril-Butadien-Styrol (ABS), Polymethylmethacrylat (PMMA), Polycarbonat (PC), Polyethylenterephthalat (PET), Polyetheretherketon (PEEK) oder Mischungen oder Co-Polymerisate diese.

Dabei können unabhängig von dem Grundmaterial des Trägers, jedoch insbesondere unter Verwendung von PVC, Weichmacher vorgesehen sein, die etwa in einem Bereich von >0 Gew.-% bis ≤ 20 Gew.-%, insbesondere ≤ 10 Gew.-%, vorzugsweise ≤ 7 Gew.-%, beispielsweise in einem Bereich von ≥ 5 Gew.-% bis ≤ 10 Gew.-% vorliegen können. Ein geeignete Weichmacher umfasst etwa den unter der Handelsbezeichnung "Dinsch" von der Firma BASF vertriebenen Weichmacher. Ferner können als Ersatz für herkömmliche Weichmacher Copolymere, wie etwa Acrylate oder Methacrylate, vorgesehen sein. Ferner kann in oder vor der Zweibandpresse in dieser Ausgestaltung der Träger auf eine Temperatur unterhalb der Schmelztemperatur des Kunststoff-Bestandteils gekühlt werden.

Insbesondere thermoplastische Kunststoffe bieten auch den Vorteil, dass die aus ihnen hergestellten Produkte sehr leicht rezykliert werden können. Es können auch Recycling-Materialien aus anderen Quellen verwendet werden. Hierdurch ergibt sich eine weitere Möglichkeit zur Senkung der Herstellungskosten.

Derartige Träger sind dabei sehr elastisch beziehungsweise federnd, was einen komfortablen Eindruck beim Begehen erlaubt und ferner die auftretenden Geräusche bei einem Begehen im Vergleich zu herkömmlichen Materialien reduzieren kann, somit ein verbesserter Trittschall realisierbar sein kann.

Darüber hinaus bieten die vorgenannten Träger den Vorteil einer guten Wasserfestigkeit, da sie eine Quellung von 1% oder weniger aufweisen. Dies gilt in überraschender Weise neben reinen Kunststoffträgern auch für WPC-Werkstoffe, wie diese nachfolgend im Detail erläutert sind.

Für einen reinen Kunststoffträger kann beispielsweise Polyvinylchlorid von Vorteil sein.

In besonders vorteilhafter Weise kann das Trägermaterial Holz-Polymer-Werkstoffe (Wood Plastic Composite, WPC) aufweisen oder daraus bestehen. Hier kann beispielhaft ein Holz und ein Polymer geeignet sein, welches in einem Verhältnis von 40/60 bis 70/30, beispielsweise 50/50 vorliegen kann. Als Polymere Bestandteile können etwa Polypropylen, Polyethylen oder ein Copolymer aus den beiden vorgenannten Materialien verwendet werden, wobei ferner Holzmehl als Holzbestandteil Verwendung finden kann. Derartige Materialien bieten den Vorteil, dass diese bereits bei geringen Temperaturen, wie etwa in einem Bereich von ≥ 180°C bis ≤ 200°C in dem vorbeschriebenen Verfahren zu einem Träger geformt werden können, so dass eine besonders effektive Prozessführung, etwa mit beispielhaften Liniengeschwindigkeiten in einem Bereich von 6m/min, ermöglicht werden kann. Beispielsweise sind für ein WPC-Produkt mit einer 50/50 Verteilung der Holz- und Polymeranteile bei einer beispielhaften Produktstärke von 4,1mm möglich, was einen besonders effektiven Herstellungsprozess ermöglichen kann.

Ferner können so sehr stabile Paneele erzeugt werden, die weiterhin eine hohe Elastizität aufweisen, was insbesondere für eine effektive und kostengünstige Ausgestaltung von Verbindungselementen an dem Randbereich des Trägers und ferner bezüglich einer Trittschalldämmung von Vorteil sein kann. Ferner kann auch die vorgenannte gute Wasserverträglichkeit mit einer Quellung von unter 1% bei derartigen WPC-Materialien ermöglicht werden. Dabei können WPC-Werkstoffe beispielsweise Stabilisatoren und/oder andere Additive aufweisen, welche bevorzugt im Kunststoffanteil vorliegen können.

Bei Kunststoff-basierten Paneelen, etwa basierend auf Polyvinylchlorid, wie auch bei WPCbasierten Paneelen, etwa basierend auf Polypropylen und/oder Polyethylen, können dabei mineralische Füllstoffe von Vorteil sein. Besonders geeignet sind hier etwa Talkum beziehungsweise Talk oder auch Kalziumcarbonat (Kreide), Aluminiumoxid, Kieselgel, Quarzmehl, Holzmehl, Gips. Beispielsweise kann Kreide vorgesehen sein. Der Anteil der mineralischen Füllstoffe, wie etwa von Talkum, kann in einem Bereich von ≥ 30 Gew.-% bis ≤ 80 Gew.-%, beispielsweise von ≥ 45 Gew.-% bis ≤ 70 Gew.-% liegen. Durch die Füllstoffe, insbesondere durch die Kreide, kann der Schlupf des Trägers verbessert werden. Bei der Verwendung von Talkum, beispielsweise, kann es ermöglicht werden, dass eine verbesserte Hitzebeständigkeit und Feuchtigkeitsbeständigkeit ermöglicht wird. Auch können die Füllstoffe in bekannter Weise eingefärbt sein. Beispielsweise kann eine Mischung aus Talkum und Polypropylen vorliegen, bei welcher Talkum in dem vorgenannten Mengenbereich, etwa bei 60 Gew.-% vorliegt. Insbesondere kann es vorgesehen sein, dass das Plattenmaterial ein Flammschutzmittel aufweist.

Gemäß einer besonders bevorzugten Ausgestaltung der Erfindung besteht das Trägermaterial aus einer Mischung eines PE/PP Blockcopolymers mit Holz. Dabei kann der Anteil des PE/PP Blockcopolymers sowie der Anteil des Holz zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤600µm mit einer bevorzugten Partikelgrößenverteilung D50 von ≥400µm. Insbesondere kann das Trägermaterial dabei Holz mit einer Partikelgrößenverteilung D10 von ≥400µm aufweisen. Die Partikelgrößenverteilung ist dabei auf den volumetrischen Durchmesser bezogen und bezieht sich auf das Volumen der Partikel.

Gemäß einer weiteren bevorzugten Ausgestaltung der Erfindung besteht das Trägermaterial aus einer Mischung eines PE/PP Polymerblends mit Holz. Dabei kann der Anteil des PE/PP Polymerblends sowie der Anteil des Holz zwischen ≥45 Gew.-% und ≤55 Gew.-% liegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤600µm mit einer bevorzugten Partikelgrößenverteilung D50 von ≥400µm. Insbesondere kann das Trägermaterial dabei Holz mit einer Partikelgrößenverteilung D10 von ≥400µm aufweisen.

Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PE/PP Polymerblend mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm.

In einer weiteren Ausgestaltung der Erfindung besteht das Trägermaterial aus einer Mischung eines PP-Homopolymers mit Holz. Dabei kann der Anteil des PP-Homopolymers sowie der Holzanteil zwischen ≥45 Gew.-% und ≤55 Gew.-% liegen. Beispielsweise können die Bestandteile Holz und Polypropylen in einem Verhältnis von 0,5:1 bis 1:0,5, etwa 1:1 vorliegen. Desweiteren kann das Trägermaterial zwischen ≥0 Gew.-% und ≤10 Gew.-% weiterer Additive, wie beispielsweise Fließhilfsmittel, Thermostabilisatoren oder UV-Stabilisatoren aufweisen. Die Partikelgröße des Holzes liegt dabei zwischen >0µm und ≤600µm mit einer bevorzugten Partikelgrößenverteilung D50 von ≥400µm. Insbesondere kann das Trägermaterial dabei Holz eine Partikelgrößenverteilung D10 von ≥400µm aufweisen. Die Partikelgrößenverteilung ist dabei auf den volumetrischen Durchmesser bezogen und bezieht sich auf das Volumen der Partikel. Besonders bevorzugt wird dabei das Trägermaterial als granulierte oder pelletierte vorextrudierte Mischung aus einem PP-Homopolymer mit Holzpartikeln der angegeben Partikelgrößenverteilung bereitgestellt. Das Granulat und/oder die Pellets können dabei bevorzugt etwa eine Korngröße in einem Bereich von ≥ 400µm bis ≤ 10mm, bevorzugt ≥ 600µm bis ≤ 10mm aufweisen, insbesondere ≥ 800µm bis ≤ 10mm.

Zur Bestimmung der Partikelgrößenverteilung kann auf die allgemein bekannten Verfahren wie beispielsweise die Laserdiffraktometrie zurückgegriffen werden, mit welcher Partikelgrößen im Bereich von einigen Nanometern bis hin zu mehreren Millimetern bestimmt werden können. Mittels dieser Methode lassen sich auch D50 bzw. D10 Werte ermitteln, welche 50% bzw. 10% der gemessenen Partikel kleiner sind als der angegebene Wert.

Wie vorstehend angedeutet kann es vorteilhaft sein, dass der plattenförmige Träger ein mineralisches Material, insbesondere Talkum, aufweist. Beispielsweise kann es vorgesehen sein, dass das Trägermaterial ein einen Kunststoff aufweisendes Matrixmaterial und ein Feststoffmaterial aufweist, wobei das Feststoffmaterial zu wenigstens 50 Gew.-%, insbesondere zu wenigstens 80 Gew.-%, insbesondere zu wenigstens 95 Gew.-%, bezogen auf das Feststoffmaterial, durch Talkum gebildet ist, wobei das Matrixmaterial in einer Menge, bezogen auf das Trägermaterial, von ≥ 30 Gew.-% bis ≤ 70 Gew.-%, insbesondere von ≥ 40 Gew.-% bis ≤ 60 Gew.-%, vorliegt und wobei das Feststoffmaterial, bezogen auf das Trägermaterial, in einer Menge, bezogen auf das Trägermaterial, von ≥ 30 Gew.-% bis ≤ 70 Gew.-%, insbesondere von ≥ 40 Gew.-% bis ≤ 60 Gew.-%, vorliegt, und wobei das Trägermaterial und das Feststoffmaterial gemeinsam, bezogen auf das Trägermaterial (20), in einer Menge von ≥ 95 Gew.-%, insbesondere ≥ 99 Gew.-%, vorliegen.

Beispielsweise kann das Trägermaterial aus wenigstens einem Kunststoff, Talkum, gegebenenfalls einem Holzbestandteil und gegebenenfalls einem Haftvermittler bestehen.

Es kann ferner bevorzugt sein, dass Talkum in Form von Partikeln vorliegt, die eine Partikelgröße D₅₀ aufweisen in einem Bereich von ≥ 3µm bis ≤ 6µm, vorzugsweise in einem Bereich von ≥ 4µm bis ≤ 5µm und/oder dass Talkum in Form von Partikeln vorliegt, die eine Partikelgröße D₉₈ aufweisen in einem Bereich von ≥ 10µm bis ≤ 30µm, vorzugsweise in einem Bereich von ≥ 15µm bis ≤ 20µm.

Bezüglich des Matrixmaterials kann es vorgesehen sein, dass dieses Polypropylen umfasst, wobei das Polypropylen beispielsweise eine Mischung aus einem Homopolymer und einem Copolymer aufweisen kann.

Weiterhin kann es bevorzugt sein, dass zwischen dem insbesondere plattenförmigen Träger und der Dekorschicht zumindest eine Weißschicht angeordnet ist. Unter einer Weißschicht ist insbesondere zu verstehen eine Schicht, die als Farbschicht ausgestaltet sein kann, und die insbesondere weiß ausgestaltet ist. Durch das Vorsehen einer derartigen Weißschicht kann das Erscheinungsbild des Dekors, insbesondere wenn das Dekor als Druckschicht ausgestaltet ist, besonders hochwertig wirken. Insbesondere kann die Farbgestaltung besonders kontrastreich sein beziehungsweise können die Farben besonders echt sein, so dass eine besonders exakte und detailgetreue Nachbildung einer Dekorvorlage möglich ist.

Dabei kann es vorgesehen sein, dass die Stabilitätsschicht wenigstens eine Weißschicht ausbildet. Insbesondere in dieser Ausgestaltung kann eine einfache und kostengünstige Herstellbarkeit ermöglicht werden, da die Vorteile einer Weißschicht mit denen einer Stabilitätsschicht in nur einer aufgebrachten Schicht vereint werden können, so dass gegebenenfalls trotz des Ermöglichens der vorgenannten Vorteile auf ein Schicht verzichtet werden kann. Dadurch kann das Herstellungsverfahren vereinfacht und Kosten eingespart werden. Dies kann beispielsweise erreicht werden, indem der Stabilitätsschicht beziehungsweise dem Polyurethan zum Ausbilden der Stabilitätsschicht Farbpigmente zugefügt werden.

In einer weiteren bevorzugten Ausgestaltung des erfindungsgemäßen Dekorpaneels weist dieses auf der dem Dekor gegenüberliegenden Seite des plattenförmigen Trägers einen Gegenzug auf. Es kann jedoch weiter bevorzugt sein, dass auf der der bedruckten Seite gegenüberliegenden Seite des plattenförmigen Trägers kein Gegenzug vorgesehen ist. Ein solches gegenzugfreies Paneel ist durch die Material- und Arbeitsschrittersparnis insbesondere kostengünstiger herstellbar und bietet somit neben ökologischen Vorteilen der Ressourcenschonung auch ökonomische Vorteile.

Gemäß einer weiteren Ausgestaltung der Erfindung kann der insbesondere plattenförmige Träger zumindest in einem Randbereich eine Profilierung aufweisen. Dabei kann es insbesondere vorgesehen sein, dass das Dekor auch im Bereich der Profilierung aufgebracht ist, so dass die Profilierung vor dem Aufbringen der Dekorschicht auf den plattenförmigen Träger erfolgt. Alternativ oder Ergänzend kann eine Profilierung auch nach dem Aufbringen der Dekorschicht erfolgen. Bei einer Profilierung im Sinne der Erfindung ist es vorgesehen, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Ein dekoratives Profil im Sinne der Erfindung ist beispielsweise eine im Kantenbereich des Dekorpaneels eingebrachte Fase, um beispielsweise zwischen zwei miteinander verbundenen Paneelen nach deren Verbindung eine Fuge zu simulieren, wie sie beispielsweise bei sogenannten Landhausdielen auftritt.

Bei einer teilweisen Profilierung des Dekorpaneels werden nicht bereits alle in dem letztendlichen Paneel vorzusehenden Profile eingebracht, sondern nur ein Teil der vorzusehenden Profile, während weitere Profile in einem anschließenden Schritt eingebracht werden. So kann es beispielsweise vorgesehen sein, dass das in einem Paneel vorzusehende dekorative Profil, wie beispielsweise eine Fase, in einem Arbeitsschritt eingebracht wird, während das funktionale Profil, beispielsweise Nut/Feder in einem nachgelagerten Arbeitsschritt eingebracht wird.

Durch eine Aufbringung des Dekors erst nach dem zumindest teilweisen Profilieren des Trägers, etwa durch die vorbeschriebenen Verfahren wie beispielsweise Direktdruckverfahren, wird ein Abtragen oder Beschädigen des Dekors im Zuge der Profilierung in vorteilhafter Weise vermieden. Dadurch entspricht das Dekor auch in den Bereichen der Profilierung in detailgetreuer Weise der gewünschten Imitation beispielsweise eines Naturwerkstoffes.

Mit Bezug auf weitere technische Merkmale und Vorteile des vorbeschriebenen Dekorpaneels wird Bezug genommen auf die nachfolgende Beschreibung des Verfahrens, auf die Figuren sowie die Beschreibung der Figuren.

Gegenstand der vorliegenden Erfindung ist ferner ein Verfahren zum Herstellen eines Dekorpaneels, aufweisend die Verfahrensschritte:
a) Bereitstellen eines plattenförmigen Trägers;
b) Aufbringen eines Dekoruntergrunds auf zumindest einen Teilbereich des plattenförmigen Trägers;
c) Aufbringen eines eine Dekorvorlage nachbildenden Dekors auf zumindest einen Teilbereich des Dekoruntergrunds;
d) Aufbringen einer Schutzschicht auf die Dekorschicht,
wobei das Verfahren den weiteren Verfahrensschritt aufweist:
e) Aufbringen einer Stabilitätsschicht vor einem der Verfahrensschritte b) bis d), wobei die Stabilitätsschicht Polyurethan aufweist, und wobei die Stabilitätsschicht eine Dichte von > 0,8 g/cm³ aufweist.

Durch das vorbeschriebene Verfahren kann somit ein Dekorpaneel erzeugt werden, welches die Vorteile aufweist, wie diese vorstehend mit Bezug auf das Dekorpaneel im Detail beschrieben sind.

Im Detail umfasst das Verfahren mit dem Verfahrensschritt a) das Bereitstellen eines plattenförmigen Trägers. Dies kann grundsätzlich in an sich bekannter Weise realisiert werden, wobei insbesondere ein Träger bereitgestellt werden kann, der einen Holzwerkstoff, wie etwa einen WPC-Werkstoff, aufweist.

Gemäß Verfahrensschritt b) umfasst das Verfahren das Aufbringen eines Dekoruntergrunds, wie beispielsweise eines Druckuntergrunds, auf zumindest einen Teilbereich des plattenförmigen Trägers. Der Dekoruntergrund kann beispielsweise ein Druckuntergrund sein, der dazu ausgebildet ist, etwa ein Druckverfahren, beispielsweise mittels Tintenstrahldruck, zum Aufbringen des Dekors in einer besonders vorteilhaften Weise ausführen zu können. Mit Bezug auf die Details des aufgebrachten Dekoruntergrunds wird auf die vorstehenden Ausführungen betreffend das Dekorpaneel verwiesen.

Weiterhin kann gemäß Verfahrensschritt c) ein Aufbringen eines eine Dekorvorlage nachbildenden Dekors auf zumindest einen Teilbereich des Trägers erfolgen. Dabei kann das Dekor durch den sogenannten Direktdruck aufgebracht werden. Unter dem Begriff "Direktdruck" wird im Sinne der Erfindung das Aufbringen eines Dekors direkt auf den Träger eines Paneels oder auf eine auf dem Träger aufgebrachte nicht bedruckte Faserwerkstoffschicht beziehungsweise ein Dekoruntergrund verstanden. Es können unterschiedliche Drucktechniken, wie beispielsweise Flexo-Druck, Offset-Druck oder Siebdruck zum Einsatz gelangen. Insbesondere können als Digitaldrucktechniken beispielsweise Inkjet-Verfahren oder Laserdruck-Verfahren eingesetzt werden.

Die Dekorschichten können ferner aus einer insbesondere strahlungshärtbaren Farbe und/oder Tinte ausgebildet werden. Beispielsweise kann eine UV-härtbare Farbe oder Tinte verwendet werden.

Bezüglich weiterer Merkmale der Dekorschicht wird auf die vorstehenden Ausführungen betreffend das Dekorpaneel verwiesen.

Gemäß Verfahrensschritt d) kann ein Aufbringen einer Schutzschicht auf zumindest einen Teilbereich des Dekors vorgesehen sein. Eine derartige Schicht zum Schutz des aufgebrachten Dekors kann insbesondere als Verschleiß- oder Deckschicht oberhalb der Dekorschicht in einem nachfolgenden Verfahrensschritt aufgebracht werden, welche insbesondere die Dekorschicht vor Abnutzung oder Beschädigung durch Schmutz, Feuchtigkeitseinfluss oder mechanische Einwirkungen, wie beispielsweise Abrieb, schützt.

Mit Bezug auf weitere Merkmale der Schutzschicht wird auf die vorstehenden Ausführungen betreffend das Dekorpaneel verwiesen.

Darüber hinaus kann auf der der Dekorseite gegenüberliegenden Seite des Trägers ein Gegenzug aufgebracht werden. Vorteilhaft kann jedoch auf einen Gegenzug verzichtet werden.

Alternativ oder zusätzlich können die Randbereiche des Paneels strukturiert beziehungsweise profiliert werden, um insbesondere lösbare Verbindungselemente vorzusehen. Diesbezüglich kann bei einer Profilierung im Sinne der Erfindung vorgesehen sein, dass mittels geeigneter materialabhebender Werkzeuge zumindest in einen Teil der Kanten des Dekorpaneels ein dekoratives und/oder funktionales Profil eingebracht wird. Dabei ist unter einem funktionalen Profil beispielsweise die Einbringung eines Nut- und/oder Federprofils in eine Kante zu verstehen, um Dekorpaneele über die eingebrachten Profilierungen miteinander verbindbar zu gestalten. Insbesondere bei Nut- und/oder Federprofilen sind dabei elastische Werkstoffe von Vorteil, da durch diese allein derartige Profile erzeugbar sind, welche besonders einfach handhabbar und stabil sind. So sind insbesondere keine weiteren Materialien notwendig, um die Verbindungselemente zu erzeugen.

Gemäß Verfahrens schritt e) erfolgt ferner ein Aufbringen einer Stabilitätsschicht vor einem der Verfahrensschritte b) bis d), wobei die Stabilitätsschicht Polyurethan aufweist, und wobei die Stabilitätsschicht eine Dichte von > 0,8 g/cm³ aufweist.

Durch das Vorsehen einer derartigen Stabilitätsschicht kann es erreicht werden, dass die Stabilität des Dekorpaneels signifikant verbessert wird.

Dabei kann es vorgesehen sein, dass die Stabilitätsschicht aufgebracht wird zwischen dem Träger und der Dekorschicht. Ferner kann es vorgesehen sein, dass die Stabilitätsschicht aufgebracht wird zwischen der Dekorschicht und der Schutzschicht.

Unabhängig von der exakten Position kann es von Vorteil sein, dass das Aufbringen der Stabilitätsschicht gemäß Verfahrensschritt e) erfolgt durch einen Flüssigauftrag. Hierzu kann beispielsweise geschmolzenes Polyurethan auf den entsprechenden Untergrund aufgebracht werden.

In einer Ausgestaltung kann es vorgesehen sein, dass Verfahrensschritt a) durchgeführt wird durch ein Verfahren, aufweisend die Verfahrensschritte:
a1) Bereitstellen eines schüttfähigen Trägermaterials, insbesondere eines Granulats,
a2) Anordnen des Trägermaterials zwischen zwei bandartigen Fördermitteln,
a3) Formen des Trägermaterials unter Einwirkung von Temperatur unter Ausbildung eines bahnförmigen Trägers,
a4) gegebenenfalls Komprimieren des Trägers,
a5) Behandeln des Trägers unter Einwirkung von Druck unter Verwendung einer Zweibandpresse,
a6) gegebenenfalls Abkühlen des Trägers,

In dieser Ausgestaltung kann ein besonders vorteilhaftes Verfahren zum Herstellen des Trägers ermöglicht werden.

Zunächst wird gemäß Verfahrensschritt a1) zunächst ein schüttfähiges Trägermaterial bereitgestellt. Das Trägermaterial dient als Basis zur Herstellung von insbesondere plattenförmigen Trägern für Paneele. Bezüglich der konkreten Materialmischung wird vollumfänglich auf die vorstehenden Ausführungen Bezug genommen.

In besonders vorteilhafter Weise kann das Trägermaterial als schüttfähiger Feststoff beziehungsweise als Granulat bereitgestellt werden, wobei das Granulat in Abhängigkeit des verwendeten Materials rein beispielhaft etwa eine Korngröße in einem Bereich von ≥ 100µm bis ≤ 10mm aufweisen kann. Eine bevorzugte Schüttung beziehungsweise Verteilung des Trägermaterials kann dabei eine Abweichung der Schüttdichte von ≤ 5%, insbesondere ≤ 3% aufweisen.

Gemäß Verfahrensschritt a2) wird das schüttfähige, insbesondere granulare, Trägermaterial zwischen zwei bandartigen Fördermitteln angeordnet. Im Detail wird ein unteres bandartiges Fördermittel umlaufend verfahren und in einem definierten Abstand zu dem unteren Fördermittel wird ein oberes bandartiges Fördermittel umlaufend verfahren. Das Trägermaterial kann so auf das untere Fördermittel aufgebracht werden und anschließend durch das untere und das obere Fördermittel begrenzt werden.

Dabei können die bandartigen Fördermittel zumindest teilweise aus Teflon beziehungsweise aus Polytetrafluorethylen (PTFE) ausgestaltet sein. Beispielsweise können die Bänder vollständig aus Polytetrafluorethylen geformt sein, oder es können Bänder verwendet werden, welche mit einer Außenbeschichtung aus Polytetrafluorethylen versehen sind. In letzterem Fall können etwa glasfaserverstärkte Kunststoffbänder oder Stahlbänder mit einer Beschichtung aus Polytetrafluorethylen Verwendung finden. Die Fördermittel können dabei die gesamte Vorrichtung durchlaufen, oder können unterbrochen sein und als mehrere Fördermittel ausgestaltet sein.

In einem weiteren Schritt erfolgt gemäß Verfahrensschritt a3) ein Formen des zwischen den bandartigen Fördermitteln angeordneten Trägermaterials unter Einwirkung von Temperatur beziehungsweise Wärme. In diesem Verfahrensschritt erfolgt durch die einwirkende Wärme beziehungsweise Hitze somit ein Aufschmelzen beziehungsweise Erweichen des Trägermaterials oder zumindest eines Teils desselben, wodurch beispielsweise das Granulat formbar werden kann. In diesem Zustand kann es den zwischen den Fördermitteln sich ausbildenden Aufnahmeraum homogen ausfüllen und so einen bahnförmigen Träger ausbilden, der weiter behandelt werden kann.

Der so ausgebildete bahnförmige Träger kann gleichzeitig zu oder nach Verfahrensschritt a3) folgend gemäß Verfahrensschritt a4) komprimiert werden. Dieser Verfahrensschritt kann insbesondere in einer geeigneten Presse beziehungsweise Walze erfolgen. Es erfolgt hier somit ein erstes Verdichten des bahnförmigen Trägers. Bei diesem Schritt kann der Träger bereits im Wesentlichen seine gewünschte Dicke erhalten, so dass bei folgenden Bearbeitungsschritten lediglich ein geringfügiges Verdichten erfolgen braucht und die weiteren Schritte somit besonders schonend verlaufen können, wie dies nachstehend im Detail erläutert wird. Dabei kann insbesondere sichergestellt werden, dass die Temperatur des Trägers soweit abgekühlt ist, dass eine geeignete Komprimierbarkeit unter Erhalt des gewünschten Ergebnisses ermöglicht werden kann.

In einem weiteren Verfahrensschritt a5) erfolgt nun ein weiteres Behandeln des Trägers unter Einwirkung von Druck unter Verwendung einer Zweibandpresse. In diesem Verfahrensschritt können insbesondere die Oberflächeneigenschaften des Trägers eingestellt werden beziehungsweise kann die Dicke des Trägers zumindest im Wesentlichen voreingestellt werden. Hierzu kann der zuvor verdichtete Träger unter Einwirkung von Druck behandelt werden, wobei insbesondere der Druck gering gewählt werden kann derart, dass diese Komprimierung lediglich in einem sehr geringen Bereich stattfindet. Somit kann die Ausgestaltung der Bearbeitungsvorrichtung in diesem Verfahrensschritt insbesondere gewählt werden in Abhängigkeit einer gewünschten Einstellung der Komprimierung, was besonders schonend und effektiv sein kann.

Dabei kann insbesondere das Verwenden einer Zweibandpresse von Vorteil sein, da mit einer derartigen Presse besonders schonende Komprimierungsschritte möglich sind und ferner die Oberflächengüte beziehungsweise Dicke des Trägers besonders effektiv und definiert eingestellt werden kann. Weiterhin kann insbesondere das Verwenden einer Bandpresse hohe Liniengeschwindigkeiten ermöglichen, so dass der gesamte Prozess einen besonders hohen Durchlauf ermöglichen kann. Darüber hinaus kann etwa durch das Vorsehen von Pneumatikzylindern eine besonders gleichmäßige und definiert einstellbare Bandspannung der Zweibandpresse ermöglicht werden.

Ein Glätten beiziehungsweise das Einstellen der Oberflächengüte kann dabei in diesem Schritt bedeuten, dass zwar die oberste Oberfläche geglättet wird, etwa bereits eingebrachte Strukturen beziehungsweise Poren jedoch nicht oder nur in einem definierten Bereich beeinflusst werden, so dass diese auch nach diesem Verfahrensschritt noch in gewünschter Weise vorliegen können, insoweit dies erwünscht ist. Dies kann insbesondere durch die Verwendung einer Bandpresse mit geeignetem Temperaturprofil und mit geeigneten Druckwerten ermöglicht werden, oder durch einen Kalander, wie dies nachstehend im Detail beschrieben ist.

Insbesondere bezüglich einer Temperaturführung kann das Verfahren dabei optimiert werden.

Es kann beispielsweise bevorzugt vorgesehen sein, dass der Träger während oder vor Verfahrensschritt a5) gekühlt wird, insbesondere unter den Schmelzpunkt oder den Erweichungspunkt eines Kunststoffbestandteils des Trägermaterials. In anderen Worten kann der Träger vor oder in der Zweibandpresse gekühlt werden. Dabei kann ein Kühlen nur in einem begrenzten Bereich erfolgen, so dass der Träger zwar noch eine verglichen zu der Raumtemperatur (22°C) erhöhte Temperatur aufweist, jedoch unterhalb der zuvor eingestellten erhöhten Temperatur liegt und dabei bevorzugt und in Abhängigkeit des verwendeten Kunststoffs, unterhalb den Schmelzpunkt oder den Erweichungspunkt des in dem Trägermaterial enthaltenen Kunststoffs. Insbesondere durch eine Kühlung des Trägers kann ein Schüsseln beziehungsweise ein Auftreten von Lunkern oder Poren verhindert werden, so dass die Oberfläche des Trägers besonders hochwertig sein kann. Geeignete Temperaturen liegen beispielsweise und nicht beschränkend in einem Bereich von unterhalb von 130°C, insbesondere unterhalb von 120°C, etwa in einem Bereich von ≥ 80°C bis ≤ 115°C für Polyethylen.

In einem optionalen Nachglätten nach der Zweibandpresse oder auch ohne ein Nachglätten kann etwa eine Temperatur eingestellt werden, die oberhalb der Kristallisierungstemperatur des Kunststoffs liegt. Für den Fall von linearem Polyethylen als Bestandteil des Trägers, beispielsweise, kann etwa ein Erhitzen auf eine Temperatur in einem Bereich von ≥ 100°C bis ≤ 150°C, beispielsweise von 120°C, ausreichend und angemessen sein.

Die Kristallisierungstemperatur ist dabei im Sinne der vorliegenden Erfindung insbesondere die Temperatur, auf welche das Polymer erhitzt werden muss, um anschließend beim Abkühlen Kristalle ausbilden zu können. Insbesondere beginnt die Kristallbildung bei einem Abkühlen des Polymers bei einer Temperatur, die unterhalb der Schmelztemperatur und gegebenenfalls oberhalb der Glasübergangstemperatur liegen kann. Entsprechend kann ein Erhitzen auf eine Temperatur unterhalb der Schmelztemperatur des jeweiligen Kunststoffes oder auf eine Temperatur unterhalb der Schmelztemperatur ausreichen. Für den Fall von linearem Polyethylen (LLDPE) kann beispielsweise ein Erhitzen auf eine Temperatur in einem Bereich von ≥ 100°C bis ≤ 150°C, beispielsweise von 120°C, ausreichend sein. Für den Fall von Polypropylen kann beispielsweise ein Erhitzen auf eine Temperatur in einem Bereich von ≥ 160°C bis ≤ 200°C, beispielsweise von 180°C, ausreichend sein.

Im weiteren Verlauf erfolgt in einem weiteren Verfahrensschritt a6) anschließend gegebenenfalls ein Abkühlen des bahnförmigen Trägers. Der Träger kann insbesondere durch das Vorsehen einer Kühlvorrichtung mit definierten Kühlstufen auf eine Temperatur abgekühlt werden, welche der Raumtemperatur entspricht oder rein beispielhaft in einem Bereich von bis zu 20°C darüber liegt. Beispielsweise kann eine Mehrzahl an Kühlzonen vorliegen, um ein definiertes Abkühlen des Trägers zu ermöglichen.

Nach einem Abkühlen des erzeugten Trägers kann der Träger zunächst in bahnartiger Form oder als vereinzelte plattenartige Träger als Zwischenprodukt gelagert werden und das Verfahren kann zunächst beendet sein. Vorzugsweise schließen sich jedoch unmittelbar weitere Behandlungsschritte an, welche etwa ohne ein Anschleifen realisierbar sein können, insbesondere um den bereitgestellten Träger derart zu bearbeiten, um ein fertiges Paneel zu erzeugen, wie dies nachstehend im Detail erläutert ist.

Mit Bezug auf weitere technische Merkmale und Vorteile des vorbeschriebenen Verfahrens wird Bezug genommen auf die Beschreibung des Dekorpaneels, auf die Figuren sowie die Beschreibung der Figuren.

Weitere Vorteile und vorteilhafte Ausgestaltungen der erfindungsgemäßen Gegenstände werden durch die Zeichnungen veranschaulicht und in der nachfolgenden Beschreibung erläutert. Dabei ist zu beachten, dass die Zeichnungen nur beschreibenden Charakter haben und nicht dazu gedacht sind, die Erfindung in irgendeiner Form einzuschränken.
Fig. 1 zeigt den schematischen Aufbau einer Ausgestaltung eines Dekorpaneels gemäß der Erfindung;
Fig. 2 zeigt den schematischen Aufbau einer weiteren Ausgestaltung eines Dekorpaneels gemäß der Erfindung;
Fig. 3 zeigt den schematischen Aufbau einer weiteren Ausgestaltung eines Dekorpaneels gemäß der Erfindung;
Fig. 4 zeigt den schematischen Aufbau einer weiteren Ausgestaltung eines Dekorpaneels gemäß der Erfindung; und
Fig. 5 zeigt den schematischen Aufbau einer weiteren Ausgestaltung eines Dekorpaneels gemäß der Erfindung.

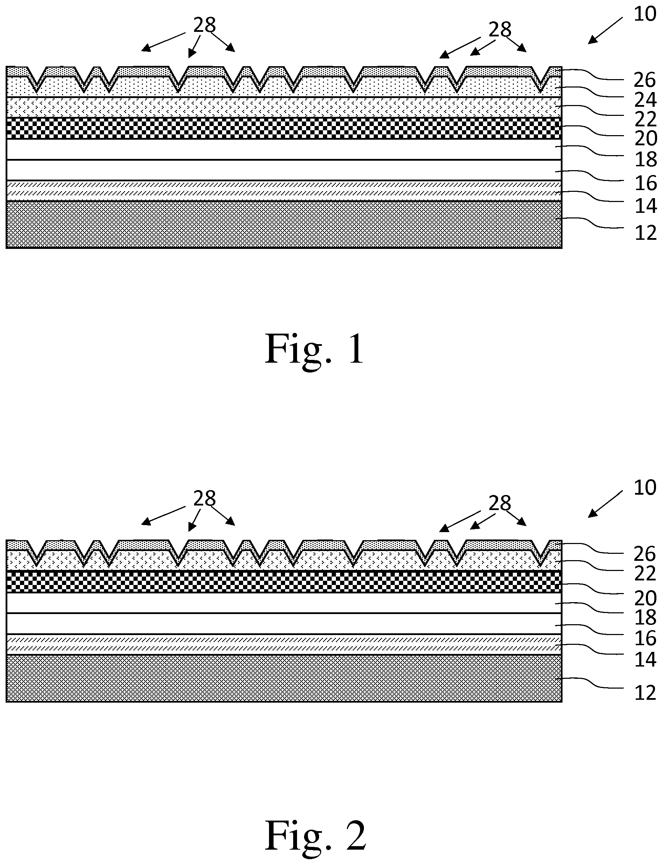

In den Figuren 1 bis 5 sind verschiedene Ausgestaltungen von Dekorpaneelen gezeigt. Dabei sollen die gleichen Bezugszeichen jeweils die gleichen oder vergleichbare Bauteile beziehungsweise Merkmale zeigen.

Fig. 1 zeigt eine erste Ausführungsform eines Dekorpaneels 10 gemäß der vorliegenden Erfindung. Dabei ist zunächst ein insbesondere plattenförmiger Träger 12 vorgesehen, der etwa aus einem Holzwerkstoff, wie beispielsweise einem WPC-Werkstoff, ausgebildet sein kann. Auf dem Träger 12 ist ein Dekoruntergrund 14 angeordnet, auf welchem gemäß Figur 1 eine erste Weißschicht 16 und eine zweite Weißschicht 18 angeordnet sind. Diese dienen als unmittelbarer Träger der Dekorschicht 20. Auf der Dekorschicht 20 ist eine Stabilitätsschicht 22 vorgesehen, die aus Polyurethan ausgestaltet ist, wobei die Stabilitätsschicht 22 eine Dichte von > 0,8 g/cm³ aufweist. Auf der Stabilitätsschicht 22 wiederum ist eine erste etwa als Lackschicht ausgestaltete Schutzschicht 24 vorgesehen, welche mit einer Struktur 28 versehen ist. Beispielsweise ist die Struktur 28 in die erste Schutzschicht 24 eingepresst und in Übereinstimmung mit der Dekorschicht 20. Als Abschluss kann eine zweite etwa als Lackschicht ausgestaltete Schutzschicht 26 aus einem Decklack aufgebracht sein.

In der Figur 2 ist eine weitere Ausgestaltung eines Dekorpaneels 10 gezeigt. Diese Ausgestaltung unterscheidet sich von der Ausgestaltung aus Figur 1 dadurch, dass auf die erste Schutzschicht 24 verzichtet wurde und die zweite Schutzschicht 24 unmittelbar auf der Stabilitätsschicht 22 angeordnet ist. Dabei ist zu erkennen, dass die Struktur 18 ebenfalls in der Stabilitätsschicht 22 vorliegt.

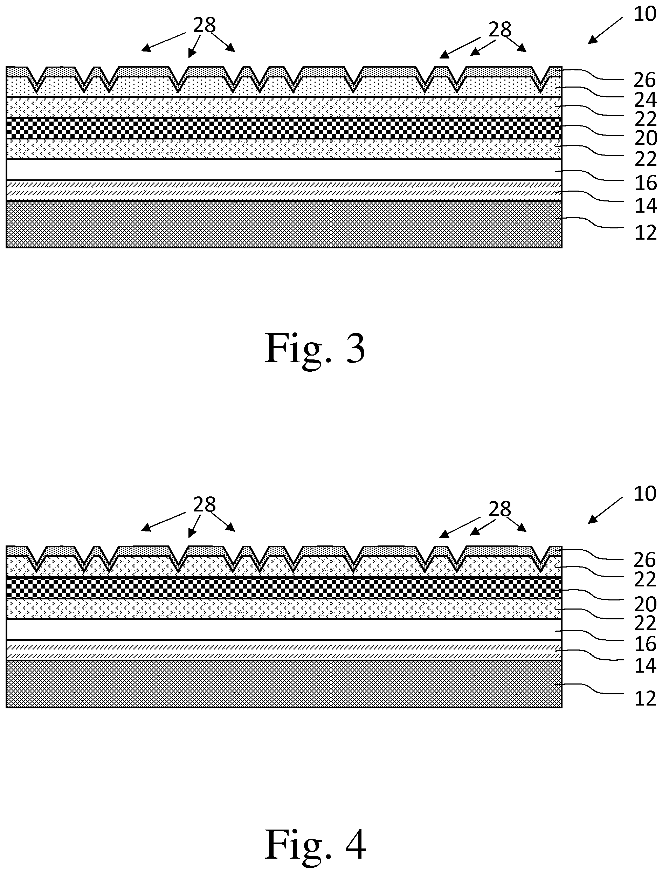

Die in der Figur 3 gezeigte Ausgestaltung eines Dekorpaneels 10 unterscheidet sich von der in Figur 1 gezeigten Ausführungsform dadurch, dass die zweite Weißschicht 18 durch eine gegebenenfalls zusätzlich vorgesehene und in weißer Farbe vorliegende Stabilitätsschicht 22 ersetzt wurde. Gegebenenfalls kann auf die erste Weißschicht 16 ebenfalls verzichtet werden.

Die in der Figur 4 gezeigte Ausgestaltung eines Dekorpaneels unterscheidet sich von der in Figur 2 gezeigten Ausführungsform dadurch, dass die zweite Weißschicht 18 durch eine zusätzliche und insbesondere ebenfalls in weißer Farbe vorliegenden Stabilitätsschicht 22 ersetzt wurde. Gegebenenfalls kann auf die erste Weißschicht 16 ebenfalls verzichtet werden.

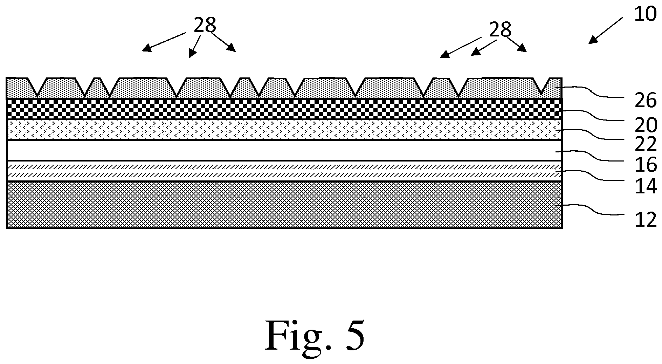

In der Figur 5 ist eine weitere Ausgestaltung eines Dekorpaneels 10 gezeigt. In dieser Ausgestaltung ist eine Stabilitätsschicht 22 lediglich zwischen der Dekorschicht 20 und dem Träger 12 positioniert, wobei die Stabilitätsschicht 22 wiederum eine, wie in Figur 5 gezeigt, oder auch beide Weißschichten 20, 22 ersetzen kann.

### Bezugszeichen:

- 10: Dekorpaneel
- 12: plattenförmiger Träger
- 14: Dekoruntergrund
- 16: Weißschicht
- 18: Weißschicht
- 20: Dekorschicht
- 22: Stabilitätsschicht
- 24: erste Schutzschicht
- 26: zweite Schutzschicht
- 28: Struktur

## Patentansprüche

1. Dekorpaneel, aufweisend einen Schichtaufbau mit einem plattenförmigen Träger (12), auf dem ein Dekoruntergrund (14) und eine auf dem Dekoruntergrund (14) aufgebrachte Dekorschicht (20) vorgesehen sind, wobei das Dekorpaneel (10) in seinem Schichtaufbau ferner zumindest eine auf die Dekorschicht (20) aufgebrachte Schutzschicht (24, 26) aufweist, **dadurch gekennzeichnet, dass** das Dekorpaneel (10) in seinem Schichtaufbau wenigstens eine Stabilitätsschicht (22) aufweist, wobei die Stabilitätsschicht (22) Polyurethan aufweist, und wobei die Stabilitätsschicht (22) eine Dichte von > 0,8 g/cm³ aufweist.

2. Dekorpaneel nach Anspruch 1, **dadurch gekennzeichnet, dass** die Stabilitätsschicht (22) aus einer Polyurethanschicht besteht.

3. Dekorpaneel nach Anspruch 1 oder 2, **dadurch gekennzeichnet, dass** die Stabilitätsschicht (22) eine Dichte in einem Bereich von ≥ 0,9 g/cm³ bis ≤ 2 g/cm³, insbesondere in einem Bereich von ≥ 1,15 g/cm³ bis ≤ 1,5 g/cm³, aufweist.

4. Dekorpaneel nach einem der vorhergehenden Ansprüche, **dadurch gekennzeichnet, dass** das Polyurethan auf Hexamethylendiisocyanat als Strukturelement basiert.

5. Dekorpaneel nach einem der vorhergehenden Ansprüche, **dadurch gekennzeichnet, dass** das Polyurethan der Stabilitätsschicht (22) einen Schmelzpunkt oder Erweichungspunkt von ≤ 150°C aufweist.

6. Dekorpaneel nach einem der vorhergehenden Ansprüche, **dadurch gekennzeichnet, dass** wenigstens eine Stabilitätsschicht (22) zwischen der Dekorschicht (20) und der Schutzschicht (24, 26) angeordnet ist.

7. Dekorpaneel nach Anspruch 6, **dadurch gekennzeichnet, dass** die Stabilitätsschicht (22) mit einer Strukturierung versehen ist.

8. Dekorpaneel nach einem der vorhergehenden Ansprüche, **dadurch gekennzeichnet, dass** wenigstens eine Stabilitätsschicht (22) zwischen dem Träger (12) und der Dekorschicht (20) angeordnet ist.

9. Dekorpaneel nach einem der vorhergehenden Ansprüche, **dadurch gekennzeichnet, dass** der Träger (12) einen Holzwerkstoff, insbesondere einen WPC-Werkstoff, aufweist.

10. Dekorpaneel nach einem der vorhergehenden Ansprüche, **dadurch gekennzeichnet, dass** der Träger (12) ein mineralisches Material, insbesondere Talkum, aufweist.

11. Dekorpaneel nach einem der vorhergehenden Ansprüche, **dadurch gekennzeichnet, dass** zwischen dem Träger (12) und der Dekorschicht (20) zumindest eine Weißschicht (16, 18) angeordnet ist.

12. Dekorpaneel nach Anspruch 11, **dadurch gekennzeichnet, dass** die Stabilitätsschicht (22) wenigstens eine Weißschicht ausbildet.

13. Dekorpaneel nach einem der vorhergehenden Ansprüche, **dadurch gekennzeichnet, dass** die Stabilitätsschicht (22) aufgebracht ist durch einen Flüssigauftrag.

14. Verfahren zur Herstellung eines Dekorpaneels (10), aufweisend die Verfahrensschritte:
a) Bereitstellen eines Trägers (12);
b) Aufbringen eines Dekoruntergrunds (14) auf zumindest einen Teilbereich des Trägers;
c) Aufbringen einer eine Dekorvorlage nachbildenden Dekorschicht (20) auf zumindest einen Teilbereich des Dekoruntergrunds (14);
d) Aufbringen einer Schutzschicht (/24, 26) auf die Dekorschicht (20),
wobei das Verfahren den weiteren Verfahrensschritt aufweist:
e) Aufbringen einer Stabilitätsschicht (22) vor einem der Verfahrensschritte b) bis d), wobei die Stabilitätsschicht (22) Polyurethan aufweist, und wobei die Stabilitätsschicht (22) eine Dichte von > 0,8 g/cm³ aufweist.

15. Verfahren nach Anspruch 14, **dadurch gekennzeichnet, dass** Verfahrensschritt e) erfolgt durch einen Flüssigauftrag.

## Claims

1. Decorative panel, including a layered structure comprising a plate-shaped carrier (12) on which a decoration substrate (14) and a decorative layer (20) applied on the decoration substrate (14) are provided, wherein the decorative panel (10) further comprises at least one protective layer (24, 26) applied onto the decorative layer (20) in its layered structure,
**characterized in that**
the decorative panel (10) comprises at least one stability layer (22) in its layered structure, wherein the stability layer (22) comprises polyurethane, and wherein the stability layer (22) has a density of > 0.8 g/cm³.

2. Decorative panel according to claim 1, **characterized in that** the stability layer (22) consists of a polyurethane layer.

3. Decorative panel according to claim 1 or 2, **characterized in that** the stability layer (22) has a density in a range of ≥ 0.9 g/cm³ to ≤ 2 g/cm³, in particular in a range of ≥ 1.15 g/cm³ to ≤ 1.5 g/cm³.

4. Decorative panel according to any one of the preceding claims, **characterized in that** the polyurethane is based on hexamethylene diisocyanate as a structural element.

5. Decorative panel according to any one of the preceding claims, **characterized in that** the polyurethane of the stability layer (22) has a melting point or a softening point of ≤ 150°C.

6. Decorative panel according to any one of the preceding claims, **characterized in that** at least one stability layer (22) is arranged between the decorative layer (20) and the protective layer (24, 26).

7. Decorative panel according to claim 6, **characterized in that** the stability layer (22) is provided with a structuring.

8. Decorative panel according any to one of the preceding claims, **characterized in that** at least one stability layer (22) is arranged between the carrier (12) and the decorative layer (20).

9. Decorative panel according to any one of the preceding claims, **characterized in that** the carrier (12) comprises a wood-based material, in particular a WPC material.

10. Decorative panel according to any one of the preceding claims, **characterized in that** the carrier (12) comprises a mineral material, in particular talcum.

11. Decorative panel according to any one of the preceding claims, **characterized in that** at least one white layer (16, 18) is arranged between the carrier (12) and the decorative layer (20).

12. Decorative panel according to claim 11, **characterized in that** the stability layer (22) forms at least one white layer.

13. Decorative panel according to any one of the preceding claims, **characterized in that** the stability layer (22) is applied by liquid application.

14. Method for producing a decorative panel (10), comprising the steps of:
a) providing a carrier (12);
b) applying a decoration substrate (14) onto at least a portion of the carrier;
c) applying a decorative layer (20) simulating a decorative template onto at least a portion of the decoration substrate (14);
d) applying a protective layer (24, 26) onto the decorative layer (20), wherein the method further comprises the step:
e) applying a stability layer (22) prior to one of the steps b) to d), wherein the stability layer (22) comprises polyurethane, and wherein the stability layer (22) has a density of > 0.8 g/cm³.

15. Method according to claim 14, **characterized in that** step e) is carried out by liquid application.

## Revendications

1. Panneau décoratif présentant une structure stratifiée avec un support (12) en forme de plaque, sur lequel un fond décoratif (14) et une couche décorative (20) rapportée sur le fond décoratif (14) sont prévus, où le panneau décoratif (10) présente en outre dans sa structure stratifiée au moins une couche de protection (24, 26) rapportée sur la couche décorative (20), **caractérisé en ce que** le panneau décoratif (10) présente dans sa structure stratifiée au moins une couche de stabilisation (22), où la couche de stabilisation (22) présente du polyuréthane et où la couche de stabilisation (22) présente une densité > 0,8 g/cm³.

2. Panneau décoratif selon la revendication 1, **caractérisé en ce que** la couche de stabilisation (22) est constituée d'une couche de polyuréthane.

3. Panneau décoratif selon la revendication 1 ou 2, **caractérisé en ce que** la couche de stabilisation (22) présente une densité dans une plage ≥ 0,9 g/cm³ à ≤ 2 g/cm³, en particulier, dans une plage ≥ 1,15 g/cm³ à ≤ 1,5 g/cm³.

4. Panneau décoratif selon l'une des revendications précédentes, **caractérisé en ce que** le polyuréthane est basé sur de l'hexaméthylène diisocyanate en tant qu'élément de structure.

5. Panneau décoratif selon l'une des revendications précédentes, **caractérisé en ce que** le polyuréthane de la couche de stabilisation (22) présente un point de fusion ou un point de ramollissement ≤ 150 °C.

6. Panneau décoratif selon l'une des revendications précédentes, **caractérisé en ce qu'**au moins une couche de stabilisation (22) est disposée entre la couche décorative (20) et la couche de protection (24, 26).

7. Panneau décoratif selon la revendication 6, **caractérisé en ce que** la couche de stabilisation (22) est munie d'une structuration.

8. Panneau décoratif selon l'une des revendications précédentes, **caractérisé en ce qu'**au moins une couche de stabilisation (22) est disposée entre le support (12) et la couche de décoration (20).

9. Panneau décoratif selon l'une des revendications précédentes, **caractérisé en ce que** le support (12) présente un matériau à base de bois, en particulier, un matériau de bois composite WPC.

10. Panneau décoratif selon l'une des revendications précédentes, **caractérisé en ce que** le support (12) présente un matériau minéral, en particulier, du talc.

11. Panneau décoratif selon l'une des revendications précédentes, **caractérisé en ce qu'**au moins une couche blanche (16, 18) est disposée entre le support (12) et la couche décorative (20).

12. Panneau décoratif selon la revendication 11, **caractérisé en ce que** la couche de stabilisation (22) forme au moins une couche blanche.

13. Panneau décoratif selon l'une des revendications précédentes, **caractérisé en ce que** la couche de stabilisation (22) est rapportée par un revêtement liquide.

14. Procédé de fabrication d'un panneau décoratif (10), présentant les étapes de procédé :
a) préparation d'un support (12) ;
b) application d'un fond décoratif (14) sur au moins une zone partielle du support ;
c) application d'une couche décorative (20) reproduisant un modèle de décor sur au moins une zone partielle du fond décoratif (14) ;
d) application d'une couche de protection (24, 26) sur la couche décorative (20), où le procédé présente l'étape de procédé supplémentaire :
e) d'application d'une couche de stabilisation (22) avant l'une des étapes de procédé b) à d), où la couche de stabilisation (22) présente du polyuréthane, et où la couche de stabilisation (22) présente une densité > 0,8 g/cm³.

15. Procédé selon la revendication 14, **caractérisé en ce que** l'étape de procédé e) a lieu par une application liquide.
